(19) Europäisches Patentamt
European Patent Office
Office européen des brevets

(11) Veröffentlichungsnummer: **0 039 745**
**B1**

(12) # EUROPÄISCHE PATENTSCHRIFT

(45) Veröffentlichungstag der Patentschrift: **28.09.83**

(51) Int. Cl.[3]: **C 25 B 1/04**, C 25 B 1/02, C 25 B 1/22

(21) Anmeldenummer: **80200457.2**

(22) Anmeldetag: **14.05.80**

(54) **Verfahren zur gleichzeitigen Herstellung von Wasserstoff und Schwefelsäure oder Sulfaten aus Schwefel und Wasser.**

(43) Veröffentlichungstag der Anmeldung: **18.11.81 Patentblatt 81/46**

(45) Bekanntmachung des Hinweises auf die Patenterteilung: **28.09.83 Patentblatt 83/39**

(84) Benannte Vertragsstaaten: **BE DE FR GB IT LU NL**

(56) Entgegenhaltungen:
**DE-A-1 814 027**
**DE-A-2 501 726**
**DE-A-2 542 935**
**DE-A-2 545 455**
**DE-A-2 613 811**
**DE-A-2 615 302**
**FR-A-2 395 332**
**US-A-4 081 337**

(73) Patentinhaber: **EUROPÄISCHE ATOMGEMEINSCHAFT (EURATOM), Bâtiment Jean Monnet Plateau du Kirchberg Boîte Postale 1907, Luxembourg (LU)**

(72) Erfinder: **Schütz, Günther, 8 Via Monterosa, Besozzo/Varese (IT)**

(74) Vertreter: **Urbanus, Henricus Maria, Ir. et al, c/o Vereenigde Octrooibureaux Nieuwe Parklaan 107, NL-2587 BP 's-Gravenhage (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 039 745 B1

BUNDESDRUCKEREI BERLIN

# Verfahren zur gleichzeitigen Herstellung von Wasserstoff und Schwefelsäure oder Sulfaten aus Schwefel und Wasser

Diese Erfindung befaßt sich mit der gleichzeitigen Herstellung von Wasserstoff und Schwefelsäure bzw. Sulfaten aus Wasser und Schwefel. Obwohl zur Zeit keine wirtschaftliche Notwendigkeit besteht, zur Produktion von Wasserstoff andere Rohstoffe zu verwenden als Erdgas oder Erdölfraktionen, nimmt das Interesse an alternativen Verfahren mit anderen Rohstoffen als Ausgangsbasis ständig zu. Dies erklärt sich durch die relativ schnell schwindenden Vorräte der am leichtesten zu handhabenden Primärenergieträger Erdgas und Erdöl.

Je nach den entstehenden Produkten können Wasserstoffprozesse in zwei Kategorien eingeteilt werden. Zur einen gehören Prozesse, die neben Wasserstoff nur Sauerstoff liefern. Beispiele dazu sind die Wasserelektrolyse und die in den letzten Jahren vorgeschlagenen thermochemischen und thermoelektrochemischen (Hybrid) Kreisprozesse, von denen zur Zeit nur die Wasserstoffelektrolyse industriell entwickelt ist. Zur anderen Kategorie gehören Prozesse, die neben Wasserstoff und eventuell Sauerstoff noch andere chemische Produkte liefern. Hierbei zählen die heute bevorzugten Prozesse wie z. B. das steam-reforming von Erdgas ebenso wie die in neuester Zeit interessanter werdende Kohlevergasung. Sie liefern neben Wasserstoff Kohlenoxid oder Kohlendioxid.

Hier wird die Herstellung von Wasserstoff aus Wasser und Schwefel vorgeschlagen, wobei Schwefelsäure oder Sulfate als Nebenprodukte entstehen. Elementarer Schwefel fällt heute in großen Mengen bei der Reinigung von Naturgas und Erdöl an. Es läßt sich zwar leicht handhaben und deponieren, doch hat man sich über seine weitere Verwendung viele Gedanken gemacht, die bis zu seinem Einsatz beim Straßenbau gehen. Die Herstellung von wertvollen chemischen Produkten wie Wasserstoff und Schwefelsäure und Schwefelsäure ist dem gegenüber vorzuziehen.

Neuerdings wurde des öfteren die gleichzeitige Herstellung von Wasserstoff und Schwefelsäure diskutiert. Ein Beispiel ist die Elektrolyse von Bromwasserstoffsäure, wobei in den Prozeß Schwefeldioxid eingeführt wird, z. B. aus einer Schwefelverbrennungsanlage oder aus Abgasen:

$$2\,HBr \rightarrow H_2 + Br_2$$
$$S + O_2 \rightarrow SO_2$$
$$Br_2 + SO_2 + 2\,H_2O \rightarrow H_2SO_4 + 2\,HBr$$
$$S + 2\,H_2O + O_2 \rightarrow H_2SO_4 + H_2$$

Ein Nachteil eines derartigen Prozesses ist, daß pro Mol Wasserstoff stets ein Mol Schwefelsäure entsteht. Dies würde bei einer erwünschten hohen Wasserstoffproduktion zu einer Überproduktion an Schwefelsäure führen.

Der Zweck der Erfindung ist jetzt, Wasserstoff und Schwefelsäure nach folgender Gleichung herzustellen:

$$S + 4\,H_2O \rightarrow H_2SO_4 + 3\,H_2$$

In diesem Falle entsteht pro Mol Wasserstoff nur 1/3 Mol Schwefelsäure. Obige Reaktion kann, wie jedem Chemiker bekannt ist, nicht direkt ausgeführt werden. Elementarer Schwefel ist im allgemeinen sehr reaktionsträge und reagiert nicht mit Wasser unter Normalbedingungen. Erst oberhalb 373 K und unter Druck findet eine nennenswerte Reaktion statt, die jedoch nicht nach der oben angegebenen Gleichung verläuft.

Die Erfindung bezieht sich auf ein Verfahren zur gleichzeitigen Herstellung von Wasserstoff und Schwefelsäure oder Sulfaten aus Schwefel und Wasser, welches Verfahren dadurch gekennzeichnet wird, daß man eine wäßrige Lösung von Bromwasserstoffsäure, worin feinverteilter Schwefel suspendiert ist, einer Elektrolyse unterzieht und erwünschtenfalls die gebildete Schwefelsäure in ein Sulfat umsetzt.

Es wurde gefunden, daß man die erwünschte Reaktion in einem Schritt in einer Elektrolyse unter Stromzufuhr ausführen kann, wenn man als Elektrolyten Bromwasserstoffsäuren nimmt, worin feinverteilter Schwefel suspendiert ist. Dabei entsteht an der Kathode reiner Wasserstoff und an der Anode Schwefelsäure. Neben dem Vorteil der Gewinnung von Reinstwasserstoff (es konnten weder Schwefelverbindungen wie $H_2S$ noch Halogen im Wasserstoff nachgewiesen werden) hat dieser Prozeß den Vorteil, daß mehrere Nebenprodukte hergestellt werden können, was deren Absatz begünstigen kann. Einmal kann die Zelle etwa 40—50%ige Schwefelsäure produzieren, die dann nach bekannten Verfahren weiter aufkonzentriert werden kann. Aus dem Elektrolyten lassen sich aber auch Sulfate mit Hilfe der entsprechenden Oxide oder Carbonate gewinnen. So läßt sich wie weiter unten beschrieben leicht Calciumsulfat mit Calciumcarbonat ausfällen, welches im Baugewerbe oder auch in Zementfabriken Verwendung finden kann. Aus dem Calciumsulfat läßt sich nach bekannten Verfahren mit Ammoniak auch Ammoniaksulfat herstellen.

In der Zeichnung ist ein Blockdiagramm einer Anlage zur Durchführung des Verfahrens gemäß der Erfindung wiedergegeben. Als Elektrolyt dient vorzugsweise Bromwasserstoffsäure einer bestimmten Konzentration, vorzugsweise von 40—60 Gew.-%. Die Elektrolyse wird in der Zelle 1 durchgeführt. Die Zufuhr elektrischer Energie zu der Zelle 1 wird symbolisch durch 2 angegeben. Eine Suspension von Schwefel in dem Elektrolyten wird mittels einer Pumpe 3 in einen Thermostat 4 geführt, in dem die Suspension auf die gewünschte Temperatur gebracht wird, vorzugsweise 353—378 K. Aus dem Thermostat 4 strömt die Suspension in die

Zelle 1, in der die Elektrolyse erfolgt. Der dabei gebildete Wasserstoff wird über eine Leitung 5 in eine Wasch- und Kühlanlage 6 geführt und dann über eine Leitung 7 gewonnen. Über eine Leitung 8 wird eine Mischung von Elektrolyten, Schwefelsäure und Schwefel aus der Zelle 1 einer Zubereitungsanlage 9 zugeführt. Die Anlage 9 besteht aus zwei Abteilungen 9A und 9B, die durch ein Diaphragma 10 getrennt sind, welches den Schwefel in der Abteilung 9A zurückhält, die Wanderung der gebildeten Schwefelsäure in die schwefelfreie Abteilung 9B jedoch nicht unterbindet. Die Abteilung 9B ist mit einem Ablauf 11 zum Abziehen eines Teiles des Säuregemisches versehen. Auch kann aus einem Gefäß 12 Calciumcarbonat in die Abteilung 9B geführt werden, wodurch Gips niedergeschlagen wird; das dabei freigewordene Kohlendioxid wird über 13 entfernt. Das Gips-Säuregemisch wird über 11 in eine Filtration- und Waschanlage 14 gebracht, in welcher der Gips aus dem Gemisch abfiltriert und mit Wasser aus einer Leitung 15 gewaschen wird. Der Gips wird über 16 gewonnen. Das Säuregemisch wird mit dem Waschwasser über eine Leitung 17 in ein Gefäß 18 geführt, darin mit feinverteiltem Schwefel verrührt, mit der in der Abteilung 9A vorhandenen Mischung von Elektrolyten, Schwefelsäure und Schwefel vermischt, worauf die erhaltene Mischung über eine Leitung 19 und der Pumpe 3 dem Elektrolytkreislauf zugeführt wird.

## Beispiel

In einer kleinen, auf die in der Zeichnung abgebildete Weise eingerichteten Demonstrationsanlage bestand die Elektrolysezelle aus einem rechtwinkligen Gehäuse aus mit Teflon® beschichtetem Edelstahl. In dem Gehäuse befanden sich vier bipolare Graphitelektroden mit je 100 $cm^2$ Oberfläche, die horizontal angeordnet waren und Kanäle zur Abführung des Wasserstoffs hatten. Das Gehäuse wurde mit zwei Graphitdeckeln abgeschlossen. Die Deckel waren mit je drei Stromanschlüssen und mit Zu- und Abflußrohren für den Elektrolyten und die Elektrolyseprodukte versehen. Die gesamte Elektrodenoberfläche betrug mit den Deckeln 500 $cm^2$. Die Elektroden waren nur durch schmale Abstandshalter aus Kunststoff (Teflon®, Plexiglas®, PVDF) voneinander getrennt. Ein Diaphragma erwies sich als nicht notwendig. Auch bei einem Elektrodenabstand von nur 2 mm wurde noch eine Stromausbeute von ca. 100% für den Wasserstoff gefunden. Die Graphitkathoden waren mit Edelmetallkatalysatoren aktiviert.

Im Gegensatz zur Wasserelektrolyse findet die gewünschte Reaktion bei sehr niedriger Zellspannung statt. Schon bei 0,7 V konnten Stromdichten von 2—3 $kA/m^2$ erreicht werden, so daß der Energieverbrauch weniger als 2 $kWh/Nm^3H_2$ bei den obengenannten Stromdichten beträgt, während er bei der Wasserelektrolyse bei etwa 4,5 $kWh/Nm^3H_2$ liegt.

Vorzugsweise wird die Elektrolyse bei einer Temperatur von 353—378 K, einer Zellspannung von 3,5—4 V und einer Stromdichte von 2—3 $kA/m^2$ durchgeführt.

Im folgenden Versuch sind einige charakteristische Daten wiedergegeben: Die Anlage wurde mit 1 kg 47,5%ige Bromwasserstoffsäure gefüllt. Der Schwefelgehalt des Elektrolyten betrug 40 g/kg HBr. Der Elektrodenabstand in der Zelle betrug 5 mm. Die Zelle wurde bei konstantem Strom gefahren — 20 A, was einer Stromdichte von 0,2 $A/cm^2$ entspricht. Nach wenigen Minuten stellte sich eine konstante Zellspannung von 3,75 V ein, was einer Spannung von 0,75 V pro Elektrodenpaar entspricht. Die Kathoden waren vorher mit ca. 1 mg $Platin/cm^2$ aktiviert worden.

Der Elektrolyt enthielt noch zusätzlich 10 mg Pt in Form von $H_2PtCl_6$. Die Temperatur in der Zelle betrug 373±2 K. Die Wasserstoffprodukten belief sich auf 41,6 Normalliter pro Stunde (99,5% der Theorie). Dem Kreislauf wurden stündlich 20 g feinverteilter Schwefel und 45 g Wasser zugegeben. Die Durchflußgeschwindigkeit betrug ca. 10 Liter/h. Die Ausbeuten an Schwefelsäure lagen zwischen 96 und 100%.

## Patentansprüche

1. Verfahren zur gleichzeitigen Herstellung von Wasserstoff und Schwefelsäure oder Sulfaten aus Schwefel und Wasser, dadurch gekennzeichnet, daß man eine wäßrige Lösung von Bromwasserstoffsäure, worin feinverteilter Schwefel suspendiert ist, einer Elektrolyse unterzieht und erwünschtenfalls die gebildete Schwefelsäure in ein Sulfat umsetzt.

2. Verfahren nach Anspruch 1, dadurch gekennzeichnet, daß man eine 40—60 Gew.-%ige Lösung von Bromwasserstoffsäure verwendet.

3. Verfahren nach den Ansprüchen 1—2, dadurch gekennzeichnet, daß man eine Suspension von 5—50 g Schwefel pro kg Säure verwendet.

4. Verfahren nach den Ansprüchen 1—3, dadurch gekennzeichnet daß man die Elektrolyse bei einer Temperatur von 353—378 K durchführt.

5. Verfahren nach den Ansprüchen 1—4, dadurch gekennzeichnet, daß man die Elektrolyse bei einer Zellspannung von 3,5 V und einer Stromdichte von 2—3 $kA/m^2$ durchführt.

## Claims

1. A process for the simultaneous production of hydrogen and sulfuric acid or sulfates from sulfur and water, characterized by subjecting an aqueous solution of hydrobromic acid in which finely-divided sulfur is suspended to electrolysis and, if desired, converting the sulfuric acid

formed into a sulfate.

2. A process according to claim 1, characterized by using a 40—60 wt% solution of hydrobromic acid.

3. A process according to claims 1—2, characterized by using a suspension of 5—50 g sulfur per kg of acid.

4. A process according to claims 1—3, characterized by conducting the electrolysis at a temperature of 353—378 K.

5. A process according to claims 1—4, characterized by conducting the electrolysis at a cell voltage of 3.5—4 V and a current density of 2—3 kA/$m^2$.

**Revendications**

1. Procédé pour la fabrication simultanée d'hydrogène et d'acide sulfurique ou de sulfates à partir de soufre et d'eau, caractérisé en ce qu'on soumet à une électrolyse une solution aqueuse d'acide bromhydrique dans laquelle du soufre finement divisé est en suspension et, si on le désire, on transforme l'acide sulfurique formé en un sulfate.

2. Procédé selon la revendication 1, caractérisé en ce qu'on utilise une solution d'acide bromhydrique à 40—60% en poids.

3. Procédé selon les revendications 1 et 2, caractérisé en ce qu'on utilise une suspension de 5—50 g de soufre par kg d'acide.

4. Procédé selon les revendications 1—3, caractérisé en ce qu'on effectue l'électrolyse à une température de 353—378° K.

5. Procédé selon les revendications 1—4, caractérisé en ce qu'on effectue l'électrolyse à une tension de cellule de 3,5—4 V et une densité de courant de 2—3 kA/$m^2$.

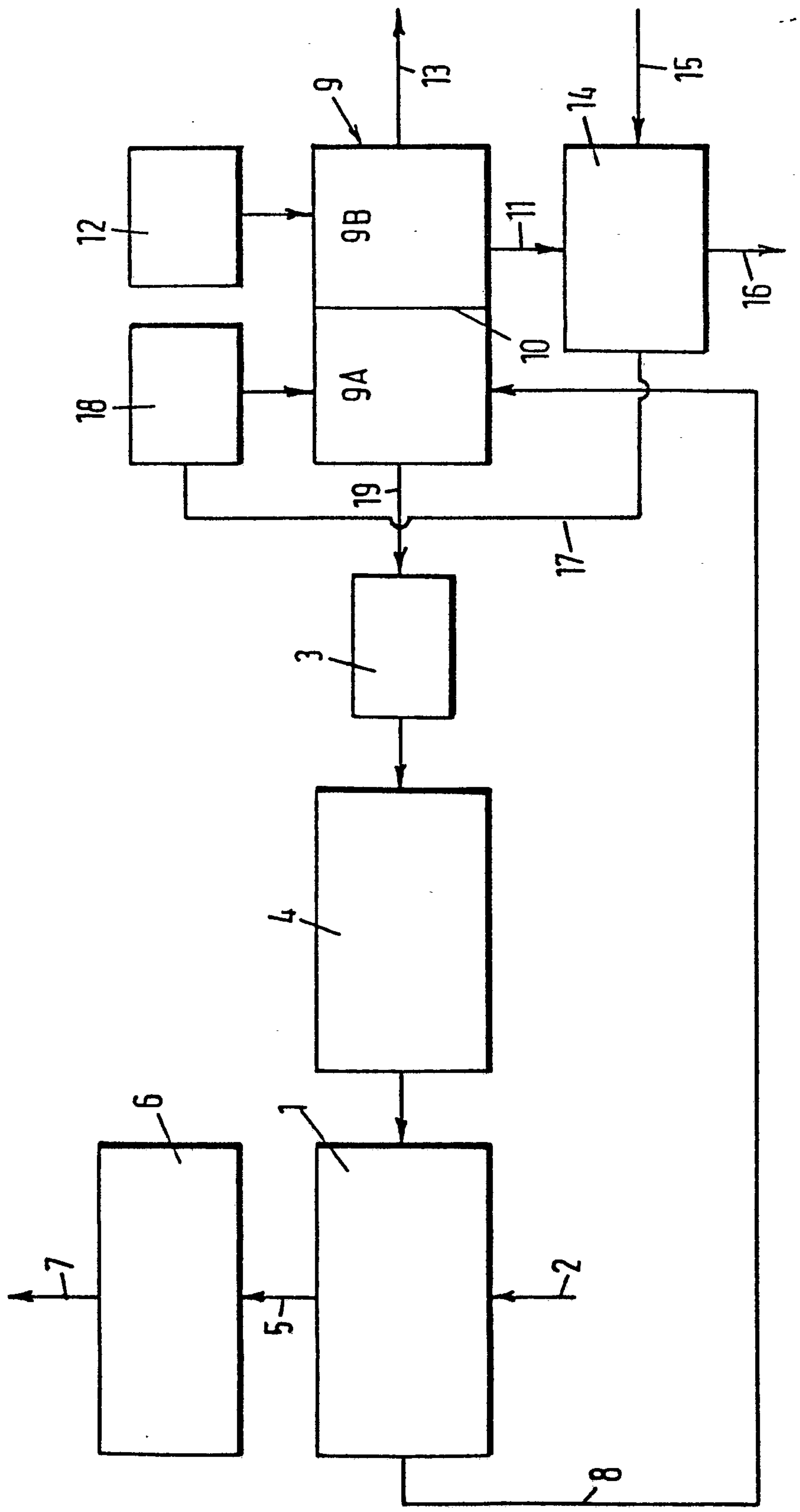

9
9A
9B
10
11
12
13
14
15
16
17
18
19
3
4
1
2
5
6
7
8